Europäisches Patentamt

European Patent Office

Office européen des brevets

(19)

(11) Numéro de publication: **0 129 515**
**B1**

(12) **FASCICULE DE BREVET EUROPEEN**

(45) Date de publication du fascicule du brevet: **07.11.90**

(51) Int. Cl.⁵: **B 23 D 36/00** // B26D1/60

(21) Numéro de dépôt: **84830127.1**

(22) Date de dépôt: **20.04.84**

(54) **Procédé de contrôle des étapes de travail d'un dispositif de coupe mobile sur des tuyaux extrudés en continu.**

(30) Priorité: **21.06.83 IT 347183**

(43) Date de publication de la demande:
**27.12.84 Bulletin 84/52**

(45) Mention de la délivrance du brevet:
**07.11.90 Bulletin 90/45**

(84) Etats contractants désignés:
**AT BE DE FR GB NL SE**

(56) Documents cités:
**DE-A-2 063 455**
**FR-A-2 343 548**
**GB-A- 661 851**
**US-A-3 175 381**
**US-A-3 490 322**

(73) Titulaire: **S.I.C.A. SERRANDE INFISSI
CARPENTERIA ATTREZZATURA S.p.A.
Via Stroppata, 28
I-48011 Alfonsine (Ravenna) (IT)**

(72) Inventeur: **Savioli, Leopoldo
Via Cavallotti 48
I-48011 Alfonsine(Ravenna) (IT)**

(74) Mandataire: **Lanzoni, Luciano
c/o BUGNION S.p.A. Via Farini, 37
I-40124 Bologna (IT)**

Courier Press, Leamington Spa, England.

**Description**

La présente invention concerne un procédé de contrôle des étapes de travail d'un dispositif de coupe mobile sur des tuyaux extrudés en continu.

Le document US—A—3490322 décrit un procédé de contrôle des étapes de travail d'un dispositif de coupe mobile sur des barres extrudés en continu, ledit dispositif comportant des moyens de détection continue des déplacements d'une barre par rapport audit dispositif de coupe pour détecter sans interruption la longueur de la barre passant à l'intérieur dudit dispositif de coupe et des moyens de commandes audit dispositif de coupe pour lui transmettre un déplacement alternatif dans les deux directions de développement de ladite barre, le procédé consistant: à détecter sans interruption les déplacements des barres par rapport audit dispositif de coupe, a commander plus d'une fois audit dispositif de coupe lesdits déplacements alternatifs, chaque déplacement de course en arrière, dans le sens contraire au sens d'extrusion terminant à une position fixe.

On sait que les tuyaux de matière plastique, par exemple destinés à obtenir des gouttières et tuyaux d'écoulement en général, sont produits per extrusion continue et subséquent coupe de mesure suivant les nécessités envisagées.

La coupe ou subdivision de ces tuyaux en tronçons de longueur proportionnée aux différentes exigences est généralement exécutée au moyen de dispositifs de coupe appropriés mobiles selon un mouvement alternatif sur les tuyaux extrudés. Pratiquement ces dispositifs de coupe, connus en soi, sont pourvus de mâchoires en mesure de serrer les tuyaux en mouvement ainsi que d'organes de coupe qui interviennent sur les tuyaux quand lesdites mâchoires sont serrées. Les organes de coupe agissent par mouvement annulaire étant donné que les tuyaux sont entiérement supportés et traversés par une tige métallique. Des organes appropriés s'occupent enfin des mouvements du dispositif de coupe quand les mâchoires sont ouvertes.

Les étapes de travail dudit dispositif de coupe se déroulent de la manière suivante. D'abord le dispositif est disposé sur une position de référence pendant que le tuyau à couper avance. Quand la zone de coupe s'approche, les mâchoires sont serrées et pendant que le dispositif se déplace étant solidaire du tuyau, la coupe est effectuée. Après la coupe les mâchoires s'ouvrent immédiatement et le dispositif retourne à sa position initiale de référence dans l'attente qu'une autre zone de coupe vienne se trouver en correspondance de ladite position initiale.

Toutes ces étapes sont contrôlées par un appareillage basé sur l'emploi d'un senseur en mesure de détecter les déplacements absolus du tuyau extrudé en continu.

Ce mode d'affecteur la coupe des tuyaux est résulté acceptable jusqu'à quand les vitesses d'extrusion des mêmes tuyaux ont été relativement réduites et les coupes espacées l'une de l'autre. Augmentant la vitesse d'extrusion le rythme de déplacement du dispositif de coupe est devenu insatisfaisant ou acceptable seulement en cas de tronçons de tuyaux relativement longs. Il faut en effet prendre en considération la fait qu'il n'est pas possible d'augmenter au-delà d'une certaine limite la vitesse de mouvement dudit dispositif de coupe du fait que ce dernier a une masse importante.

Il faut également remarquer que quand la vitesse du tuyau en question est relativement élevée, les mâchoires du dispositif de coupe et le tuyau subissent une secousse violente lors de la fermeture des mêmes mâchoires, étant donné que ces dernières deviennent solidaires du tuyau presque instantanément.

On ne peut pas évidement obvier à ces graves inconvénients en adoptant un dispositif de coupe qui ne devient pas solidaire du tuyau en mouvement, pendant les opérations de coupe. Cela en considération du fait qu'on créerait des lignes de coupe imprécises et des forcements qui deviendraient plus forts au fur et à mesure que la vitesse du tuyau en phase d'extrusion augmente. D'ailleurs, ledit dispositif de coupe est pleinement efficient en ce qui concerne l'opération de coupe spécifique et donc il ne nécessite pas de modifications structurales importantes.

Dans cette situation la tâche technique qui est à la base de la présente invention est de mettre en oeuvre un procédé de contrôle des étapes de travail d'un dispositif de coupe du type précité, lesquels soient en mesure de pallier les inconvénients mentionnés plus haut.

Dans le cadre de cette tâche technique c'est un important but de la présente invention de mettre en oeuvre un procédé qui, tout en utilisant un dispositif de coupe connu en soi, permettent la formation de tronçons de tuyaux de longueur limitée, en présence d'une vitesse d'extrusion élevée.

Un autre but de l'invention est de mettre en oeuvre un procédé de type relativement simple qui soient facilement réalisables et applicabiles par les industries opérant dans ce domaine spécifique.

La définition de l'invention est presentée à la revendication 1.

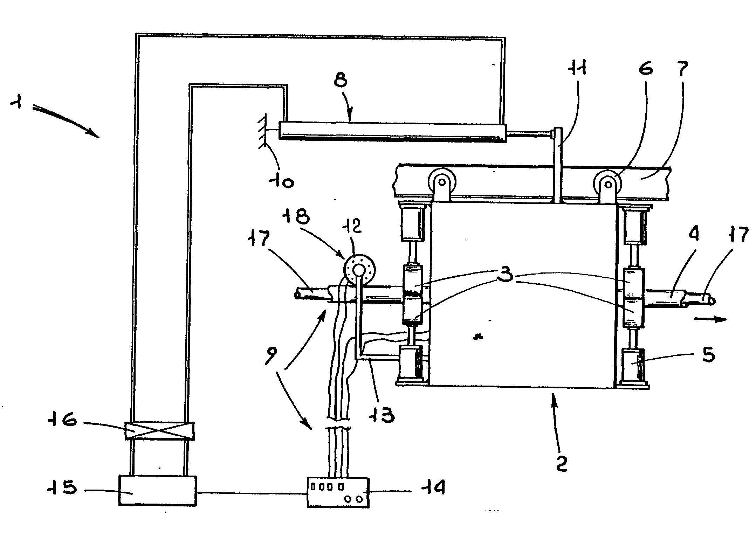

D'autres avantages ressortiront plus clairement de la description d'une forme d'exécution préférée mais non exclusive de l'invention donnée à simple titre d'exemple non limitatif en se référant au dessin annexé dans lequel l'unique figure montre schématiquement l'ensemble formé d'un dispositif de coupe, d'un tuyau extrudé et d'un appareillage de contrôle dudit dispositif de coupe.

En se référant à ladite figure, l'appareillage de contrôle est globalement indiqué en 1. Il agit sur un dispositif de coupe 2 mobile de type connu en soi et essentiellement défini par une paire de mâchoires 3 qui peuvent se serrer sur un tuyau 4 en mouvement étant extrudé en continu par une machine appropriée. Les mâchoires 3 sont commandées, par exemple, par des groupes oléohydrauliques 5 et peuvent contenir des organes de coupe par exemple de type rotatif ou annulaire de manière apte à couper le tuyau 4 sans interférer avec une barre de support 17 introduite à l'intérieur de celui-ci. Tout le dispositif de coupe 2, encore de manière connue en soi, est suspendu au moyen de roues 6 à des glissières supérieures 7 qui se développent parallèlement au tuyau 4.

L'appareillage comporte des organes de translation 8 destinés à imprimer un mouvement alternatif au dispositif de coupe 2 et des moyens de commande 9 des organes de translation 8.

Les organes de translation 8 comportent un cylindre de translation du type à effet double et se développant entre un élément fixe 10 et un élément de liaison 11 au dispositif de coupe 2.

Les moyens de commande 9 comportent un dispositif de détection 18, ici un senseur 12, destiné à détecter la position relative du dispositif de coupe 2 par rapport au tuyau 4. Dans le cas spécifique illustré on prévoit un seul senseur 12 obtenu au moyen d'un encodeur prenant appui le long de sa périphérie sur le tuyau 4 et supporté au centre par le dispositif de coupe 2 au moyen d'un support 13.

Selon une autre forme de l'appareillage, on prévoit deux senseurs distincts: un premier senseur qui détecte les déplacements absolus du dispositif de coupe 2.

Les moyens de commande 9 comportent en outre une boîte de contrôle électronique 14 qui traite les signaux du senseur 12 ou les signaux de ladite paire de senseurs détectant les déplacements absolus du tuyau 4 et du dispositif de coupe 2. Dans ce dernier cas la boîte de contrôle électronique 14 soustrait (ou somme) entre elles les valeurs relatives desdits déplacements absolus, selon si elles sont concordantes ou discordantes.

La boîte de contrôle électronique 14 règle directement une boîte de contrôle hydraulique 15 qui agit sur ledit cylindre de translation moyennant l'interposition de soupapes de contrôle 16 en mesure de doser de manière voulue l'écoulement de fluide de et vers le cylindre de translation.

Le fonctionnement de l'appareillage est évident et ne demande pas d'explications particulières. Le senseur ou encodeur 12 se déplaçant conjointement avec le dispositif de coupe 2 et prenant directement appui sur le tuyau 4, détermine les déplacements relatifs du dispositif de coupe 2 par rapport au même tuyau. Ces déplacements relatifs sont traités par la boîte de contrôle électronique 14 et traduits en impulsions appropriées par la boîte de contrôle hydraulique 15 qui contrôle le cylindre de translation.

Le procédé qui peut être avantageusement réalise par l'appareillage décrit ci-dessus est le suivant.

Les déplacements relatifs existant entre le tuyau 4 et le dispositif de coupe 2 sont détectés sans interruption, par exemple au moyen dudit sensuer 12. Sur le base de ces déplacements relatifs on commande le dispositif de coupe 2 de manière qu'il parcourt des portions de tuyau 4 égales en longueur aux tronçons de tuyau à obtenir. Ces portions sont mesurées directement sur le tuyau 4 en mouvement et sans tenir compte de la position absolue du dispositif de coupe 2.

De cette façon le dispositif de coupe 2 peut éventuellement se déplacer graduellement s'éloignant de sa position initiale de référence imposée par exemple par le cylindre de translation. On prévoit toutefois que le dispositif de coupe 2 n'atteigne pas sa position de fin de course ou du moins qu'il ne la dépasse pas, grâce à une variation périodique de la longueur des tronçons de tuyau à obtenir par coupe, variation périodique choisie de manière à disposer cycliquement le dispositif de coupe 2 en correspondance de ladite position initiale de référence.

Avantageusement on prévoit également que les déplacements du dispositif de coupe 2 soient exécutés à des vitesses absolues amorties en correspondance des points morts ou points d'inversion du mouvement du même dispositif de coupe 2. Cet amortissement peut être exécuté par exemple au moyen des soupapes de contrôle 16 du débit du fluide. De préférence en outre, les déplacements du dispositif de coupe 2 sont arrangés de manière qu'immédiatement avant les opérations de prise du tuyau 4, le même dispositif atteigne une vitesse absolue similaire à celle du tuyau 4 à découper. Pratiquement, on peut prévoir que les mâchoires 3 du dispositif 2 n'interviennent pas en correspondance des points morts de mouvement du même dispositif, mais après la mise en mouvement dudit dispositif dans le même direction de mouvement du tuyau 4. De cette façon on élimine avantageusement les chocs et les contrecoups entre le dispositif de coupe 2 et le tuyau 4.

Grâce à l'appareillage et au procédé décrits ci-dessus il est possible de découper des tronçons du tuyau 4 même très réduits en longueur, en évitant tout choc ou secousse.

En effet, à titre d'exemple, en cas de découpage de tronçons de 200 mm seulement, les étapes suivantes de travail peuvent se succéder.

D'abord le chariot 2 attend dans ladite position initiale de référence qu'une portion appropriée de tuyau 4 soit passée et après il commence, par exemple, à se déplacer conjointement avec le tuyau 4 et, dès qu'il a atteint une vitesse proche de celle de ce dernier, il ferme les mâchoires 3 et exécute l'opération de coupe.

Une fois effectuée cette opération, il ouvre les mâchoires 3 et commence une étape de retour vers la position de référence précitée. Pendant cette étape de retour le tuyau continue à glisser et les déplacements relatifs entre le tuyau et le dispositif de coupe sont détectés, ces déplacements relatifs représentant pratiquement la somme des déplacements absolus du dispositif et du tuyau.

Dès qu'un déplacement global relatif est détecté, par exemple de 140 mm, l'arrêt du dispositif de coupe 2 est commandé indépendamment de la position absolue de ce dernier. A ce point, on commande les étapes de fermeture des mâchoires 3, pendant que le tuyau glisse encore davantage jusqu'à atteindre une mesure prédéterminée et de coupe du même tuyau.

Avant la fermeture des mâchoires 3 il est préférable d'imposer une remise en marche du dispositif de coupe 2 en sens parallèle à la direction de mouvement du tuyau 4.

Après la coupe les mâchoires 3 sont rouvertes et le dispositif de coupe se déplace de nouveau en arrière, atteignant chaque fois des positions de plus en plus éloignées de ladite position initiale de référence, si le tuyau 4 glisse très rapidement et les tronçons qui doivent être découpés de celui-ci sont réduits.

Quand le dispositif de coupe 2 se rapproche de la fin de course imposée par le cylindre de translation, on effectue une étape de coupe réalisant un tronçon de tuyau particulièrement étendu en longueur de manière à permettre le retour du dispositif de coupe 2 à sa position initiale de référence. On peut donc recommencer cycliquement tout le procédé de travail.

L'invention ainsi conçue est susceptible de nombreuses modifications et variantes, sans sortir de son cadre de protection, definit par la revendication 1. Pratiquement les matériaux employés, les formes et les dimensions peuvent être quelconques suivant les nécessités.

**Revendication**

Procédé de contrôle des étapes de travail d'un dispositif de coupe mobile sur des tuyaux extrudés en continu, ledit dispositif comportant des moyens de détection continue des déplacements d'un tuyau (4) par rapport audit dispositif de coupe (2) pour détecter sans interruption la longueur du tuyau (4) passant à l'intérieur dudit dispositif de coupe (2) et des moyens de commande audit dispositif de coupe (2) pour lui transmettre un déplacement alternatif dans les deux directions de développement dudit tuyau (4), le procédé comprenant plusiers cycles de travail, qui contiennent des étapes cycliques consistant: à détecter sans interruption les déplacements des tuyaux par rapport audit dispositif de coupe, a commander plus d'une fois, pendant chaque cycle, audit dispositif de coupe (2) lesdits déplacements alternatifs avec des positions de fin de course variables par rapport à une position initiale de départ, chaque déplacement de course en arrière, dans le sens contraire au sens d'extrusion du tuyau, étant indépendant de la position absolue du dispositif de coupe et terminant chaque fois à une position de plus en plus éloignée de ladite position initiale; et à transmettre, à la fin de chaque cycle, une dernière course en arrière, plus longue que les précédentes, due à la coupe d'un tronçon de tuyau plus long que le précédent, de manière à ce que le dispositif de coupe (2) retourne cycliquement dans la position initiale de départ après avoir effectué plusieurs opérations de coupe.

**Patentanspruch**

Verfahren zur Kontrolle von Fertigungsschritten einer auf kontinuierlich stranggepressten Rohren beweglichen Schneidvorrichtung, die gennante Schneidvorrichtung enthaltend Mittel zum kontinuierlichen Erfassen der Verschiebung eines Rohres (4) im Verhältnis zu der genannten Schneidvorrichtung (2), um ohne Unterbrechung die Länge des Rohres (4), das durch das Innere der genannten Schneidvorrichtung (2) läuft, zu erfassen, sowie Antriebsmittel der obengenannten Schneidvorrichtung (2), um auf diese eine wechselweise Verschiebung in beiden Richtungen der Ausdehnung des Rohres (4) zu übertragen, wobei das Verfahren mehrere Arbeitszyklen enthält, welche zyklische Phasen umfassen, darin bestehend, ohne Unterbrechung die Verschiebungen des Rohres im Verhältnis zu der obengenannten Schneidvorrichtung zu erfassen, mehr als einmal während eines jeden Zyklus der obengenannten Schneidvorrichtung (2) die genannten wechselweisen Verschiebungen aufzuzwingen, und zwar mit veränderbaren Endanschlagpositionen im Verhältnis zu einer Ausgangsposition, wobei jede Rücklaufverschiebung in entgegengesetzter Richtung zu der Extrusionsrichtung des Rohres unabhängig von der absoluten Position der Schneidvorrichtung erfolgt und jedesmal in einer Position endet, die nach und nach immer weiter von der genannten Ausgangsposition entfernt ist, und am Ende eines jeden Zyklus einen letzten und längeren Vorlauf als die vorangegangenen auszuführen, mit dem Schnitt eines Rohrabschnittes, der länger ist als die vorherigen, so dass die Schneidvorrichtung (2) zyklisch in ihre anfängliche Bezugsposition zurückkehrt, nachdem sie mehrere Schneidvorgänge ausgeführt hat.

**Claim**

A method for controlling the working steps of a movable cutter for continuously extruded tubes, said cutter comprising detection means for continuously detecting the displacements of a tube (4) relative to said cutter (2) so as to uninterruptedly sense the tube length while passing inside the cutter (2), and control means for said cutter (2) in order to transmit the latter a reciprocating displacement in the two extension ways of said tube (4), the method comprising several working cycles containing cyclical steps consisting of: uninterruptedly detecting the tube displacements with respect to said cutter; driving said cutter (2) so that it may carry out said reciprocating displacements more than once during each cycle, the end-of-stroke positions being variable relative to an initial starting position, each backward stroke displacement in the way opposite the direction of the tube extrusion being independent of the absolute position of the cutter and terminating each time at a position increasingly more far-away from said starting position; and transmitting, at the end of each cycle, a last backward stroke longer than the preceding ones, due to the cutting of a tube length longer than the preceding one, so that the cutter (2) cyclically returns to the initial starting position after carrying out several cutting operations.